# EUROPEAN PATENT SPECIFICATION

(11) **EP 4 174 238 B1**
(45) Date of publication and mention of the grant of the patent: **06.09.2023**
(21) Application number: 22020112.3
(22) Date of filing: 16.03.2022
(51) Int. Cl.: E03D 11/14

(54) **MOUNTING BRACKET**
MONTAGERAHMEN
CADRE DE MONTAGE

(30) Priority: 29.10.2021 CN 202122642278 U
(43) Date of publication of application: 03.05.2023
(73) Proprietor: Zhongshan Meitu Plastic Ind. Co., Ltd., Zhongshan, Guangdong 528449 (CN)
(72) Inventor: Zhou, Wenhui, Zhongshan, Guangdong 528449 (CN); Zhang, Hai, Zhongshan, Guangdong 528449 (CN); Huang, Haojia, Zhongshan, Guangdong 528449 (CN); Ma, Jiafu, Zhongshan, Guangdong 528449 (CN); Liang, Weinan, Zhongshan, Guangdong 528449 (CN)
(74) Representative: Bayramoglu et al.

(56) References cited:
- EP-A1- 1 335 077
- EP-A1- 3 431 674
- EP-B1- 1 990 474
- EP-B1- 2 740 849
- WO-A1-2016/162352
- DE-A1- 2 637 749
- US-A- 6 035 589

## Description

### TECHNICAL FIELD

The disclosure relates to the technical field of bathroom installation, in particular to a mounting bracket.

### BACKGROUND

In the prior art, the water tank components, toilet parts and other components assembled on the same mounting bracket are suspended from the ground to facilitate the user's cleaning of the ground. Wherein, the height of these components suspended from the ground is constant. Therefore, it is difficult to meet the user's requirements for the suspension height during actual installation.

In US6035589A, SCHMUCKI PETER discloses a framework. The framework has at least one vertical support column, into which a telescopically height-adjustable foot connected to the support column is inserted. An approximate presetting and subsequently a fine height adjustment are possible by means of a height-adjustable adjusting member, which is self-supporting at the foot.

In EP1990474B1, LINDNER MICHAEL discloses a foot. The foot has a base plate running transverse to an extension of a hollow section leg and projecting laterally over the hollow section leg. The base plate is formed as integral extension of a rear side wall of the hollow section leg, and the base plate is bent relative to a side wall of the hollow section leg around 90 degrees. The base plate extends over a cross-section area of the hollow section leg where the hollow section leg is formed as a slotted square profile. The base plate is integrally connected with the side wall opposite to a slotted side wall.

In DE2637749A1, SEIFFERT JOACHIM discloses an installation support frame. The installation support frame is used with hollow wall units. The frame supports wall sanitary fittings, such as water closets or bidets. The frame has two vertical members connected by two horizontal spacers. The vertical member has slots for height adjustment of sanitary fittings. The system is readily installed. The support struts are made from rectangular hollow cross section profiles, pref. with square cross-section. Their rear side has longitudinal slots for fitting fastening screws for holding spacers. These in turn hold slotted holders espec. for adjustable and clamped attachment of the sanitary fittings along the spacers.

In EP2740849B1, FOMINAYA SA discloses a recessed frame for clamping of sanitary elements. The recessed frame for clamping of sanitary elements comprising a box of actuation mechanisms, an intermediate water tank and a lower structure for supporting and mounting the toilet, the three elements comprising a single one-piece part. The lower structure integrates a central crossbeam wherein two inclined crossbeams and one exhaust duct which leads into a central area of the central crossbeam flanked by the terminal sections of the inclined crossbeams converge. Jointly to the central crossbeam and at its bottom there is a bridge consisting of one single piece. Associated with the bridge we find a flange that is adaptable to any diameter of a drain pipe of the sanitary element. The one-piece part that configures the frame is manufactured in any mouldable material preferably plastic. The manufacture of the one-piece part is carried out by the technique of rotational moulding or else by the technique of injection of the material to be shaped.

In EP1335077A1, FISCHER ARTUR WERKE GMBH discloses a device for holding sanitary objects. The device for holding sanitary objects has a pair of longitudinal supports having a C-shaped cross-section in vertical alignment for holding rods provided with threads. The supports have a flat back sections with a leaf. The supports are connected by a plate and are provided with feet for placing on a floor. The feet consist of a plate-like element having a longitudinal shape with a longitudinal hole on its rear side through which a screw is placed. Preferred Features: The feet each contain a lower leaf running in a plane which is orthogonal to its rear side and provided with a through-hole for receiving pins for fixing to the floor.

In WO2016162352A1, NABETH BRUNO discloses a support structure. The support structure comprises two uprights and a crossmember which connects the two uprights and in which the upper part of the bowl is fastened. Each upright has an upper portion that is situated above the crossmember and serves as a support for the tank, and a lower portion that holds feet for fastening to the ground. The support structure comprises a supporting part which is situated under the crossmember and at a distance from the latter and which connects the two uprights. The supporting part serves to support the lower part of the bowl, under the drainage pipe. The supporting part, the crossmember and at least the lower portion of the uprights are made in one piece of composite material comprising a matrix of plastics material loaded with reinforcing fibres.

In EP3431674A1, TIBERTI LUIGI discloses an installation device. The installation device for a sanitary appliance mounting structure, comprising a substantially flat plate body having a rear face configured to lean, in use, against a support wall of the mounting structure; and at least a bracket projecting from the plate body and substantially perpendicular to the plate body; the plate body is provided with at least a pair of through openings shaped so as to receive respective fastening members for fixing the device to the support wall; the bracket has an upper contact surface, substantially horizontal in use and substantially flat, configured to receive and support in use a bottom end edge of the mounting structure.

### SUMMARY

The disclosure aims to solve at least one of the technical problems existing in the prior art. Therefore, the disclosure is to provide a mounting bracket, which can adjust the suspension height of components installed on the mounting bracket to meet the requirements of users during actual installation.

According to the invention the problem is solved by a mounting bracket according to claim 1.

In a preferred embodiment, the frame body is provided with a mounting hole for connecting with a mounting part of the water tank assembly corresponding to the mounting hole.

In a preferred embodiment, the frame body is provided with an avoidance hole, a hole wall of the avoidance hole is provided with an extension arm, and the extension arm is configured to support the water tank assembly corresponding to the extension arm.

In a preferred embodiment, the extension arm is provided with a positioning insert column, and the positioning insert column is configured for positioning connection with the water tank assembly corresponding to the positioning insert column.

In a preferred embodiment, the frame body, the accommodation cylinder and the support foot are made of aluminum.

### BRIEF DESCRIPTION OF THE DRAWINGS

The above and / or additional aspects and advantages of the disclosure will become apparent and easy to understand from the description of the embodiment in combination with the following drawings, wherein
FIG. 1 is a structural diagram of one embodiment of the mounting bracket of the disclosure with components;
FIG. 2 is a partial exploded view of the mounting bracket shown in FIG. 1;
FIG. 3 is a sectional view of A-A shown in FIG. 2;
FIG. 4 is a structural diagram of the mounting bracket shown in FIG. 1.

Reference mark:
Bracket body 100, frame body 110, recessed stiffener 111, recessed portion 112, grid stiffener 112A, mounting hole 113, avoidance hole 114, extension arm 114A, positioning insert column 114A1, accommodation cylinder 120, through hole 121,
Locking assembly 200, slider 210, fastener 220,
Support foot 300, sliding chute 310, guide hole 320,
Component a.

### DETAILED DESCRIPTION OF THE EMBODIMENTS

This part will describe the specific embodiment of the invention in detail. The preferred embodiment of the invention is shown in the attached drawings. The function of the attached drawings is to supplement the description of the text part of the description with graphics, so that people can intuitively and vividly understand each technical feature and the overall technical solution of the invention, but it cannot be understood as a limitation on the scope of the invention.

In the description of the invention, if there is a description that the first, second, third, fourth, fifth, etc. are only used to distinguish the technical features, tit cannot be understood as indicating or implying the relative importance, or implicitly indicating the number of the indicated technical features, or implicitly indicating the order of the indicated technical features.

In the description of the invention, it should be understood that the orientation or position relationship related to the orientation description, such as up, down, front, rear, left, right, etc., is based on the orientation or position relationship shown in the attached drawings, only for the convenience of describing the invention and simplifying the description, rather than indicating or implying that the device or element must have a specific orientation, or being constructed and operated in a specific orientation. Therefore, it cannot be understood as a limitation of the present invention.

In the invention, unless otherwise clearly defined, "provide", "install", "connected" and other words shall be understood in a broad sense. For example, it may be directly connected or indirectly connected through an intermediate medium; it may be fixed connection, detachable connection or integrated forming; it may be mechanical connection; it may be the connection between two elements or the interaction between two elements. Those skilled in the art can reasonably determine the specific meaning of the above words in the invention in combination with the specific contents of the technical solution.

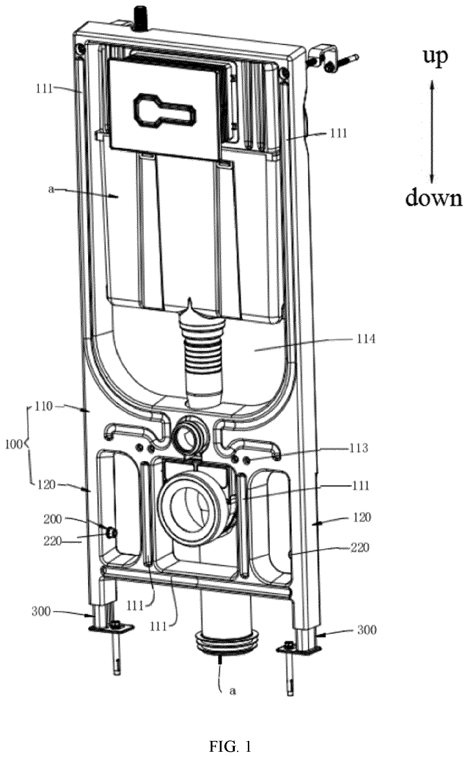

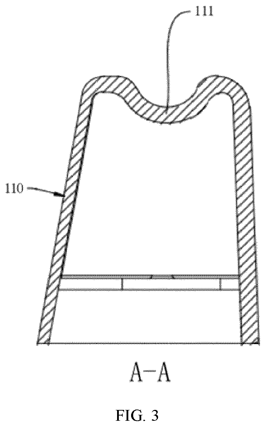

Referring to FIGS. 1 to 4, the embodiment of the disclosure relates to a mounting bracket, which includes a bracket body 100, a locking assembly 200 and a support foot 300.

The bracket body 100 is used for the installation of component a, the locking assembly 200 is arranged on the bracket body 100, the support foot 300 are arranged on the bracket body 100, the support foot 300 can slide along the up-down direction of the bracket body 100, and the locking assembly 200 can lock the support foot 300 in a preset position.

Through the above structure, the support foot 300 is installed on the ground and used to support the bracket body 100, and the locking assembly 200 can lock the support foot 300 at the preset position, so as to correspondingly adjust the height of the bracket body 100 from the ground, so that the suspension height of the components a installed on the bracket body 100 can be adjusted.

It can be understood that the locking assembly 200 can lock the support foot 300 in a preset position, and the preset position is the position of the support foot 300 relative to the bracket body 100.

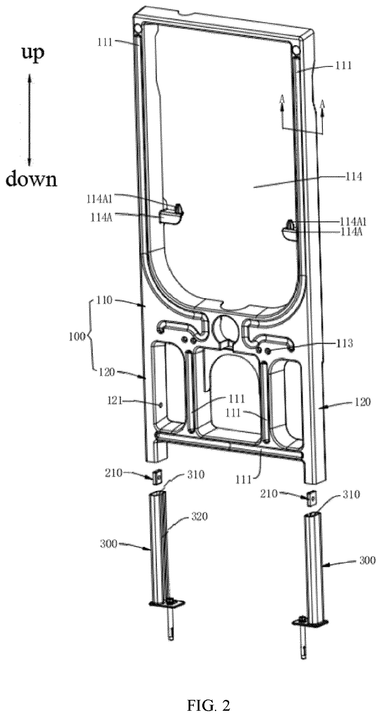

Referring to FIGS. 1 and 2, the bracket body 100 is provided with an accommodation cavity, and the support foot 300 is slidably arranged in the accommodation cavity. The support foot 300 can be retracted into the accommodation cavity to reduce the space occupied by the mounting bracket.

It should be noted that the user can lock the support foot 300 at the preset position through the locking assembly 200, so that the part of the support foot 300 corresponding to the preset position extends out of the accommodation cavity. In this embodiment, referring to FIG. 1, FIG. 2 and FIG. 4, the bracket body 100 includes an integrally formed frame body 110 and an accommodation cylinder 120, the accommodation cylinder 120 is provided with the above accommodation cavity, and the frame body 110 is used for the installation of component a being a water tank component.

Through the above structure, the bracket body 100 is cast in integrated molding, and its appearance surface has better flatness.

In the present embodiment, the frame body 110, the accommodation cylinder 120 and the support foot 300 are made of aluminum.

Through the above structure, the surface of aluminum profile will naturally produce a dense oxide layer, so that the mounting bracket can obtain a better corrosion resistance without surface spraying or baking paint and other treatment.

Referring to FIGS. 1 to 2, the support foot 300 is a strip structure, the support foot 300 is provided with a sliding chute 310 extending in the up-down direction, and a guide hole 320 communicated with the sliding chute 310, the guide hole 320 extends in the up-down direction, and the cylinder wall of the accommodation cylinder 120 is provided with a through hole 121 communicated with the accommodation cavity.

The locking assembly 200 includes a slider 210 and a fastener 220.

Referring to FIGS. 1 and 2, the slider 210 is slidably arranged in the sliding chute 310, the fastener 220 is passed through the through hole 121 and the guide hole 320 in sequence, and the fastener 220 is threaded with the slider 210, wherein the fastener 220 can be arranged as a bolt, etc. In this embodiment, the slider 210 is a block structure, and the sliding chute 310 cooperates with the slider 210 so that the rotating fastener 220 can drive the slider 210 to move in the direction close to the fastener 220, so that the fastener 220 and the slider 210 together clamp the bracket body 100 and the support foot 300, so as to lock the support foot 300 in the preset position.

It can be understood that the rotating fastener 220 can also drive the slider 210 to move away from the fastener 22, so that the fastener 220 and the slider 210 no longer clamp the support body 100 and the support foot 300. At this time, the user can drive the support foot 300 to slide relative to the locking assembly 200 to adjust the support foot 300 to another preset position.

Referring to FIG. 1, FIG. 2 and FIG. 3, the frame body 110 is a plate-shaped structure, and the surface of the frame body 110 is provided with recessed stiffeners 111.

Through the above structure, on the one hand, the recessed stiffeners 111 arranged on the surface of the frame body 110 can prevent the front and rear bending deformation of the frame body 110; on the other hand, the recessed stiffener 111 can improve the three-dimensional sense of the product.

It can be understood that the recessed stiffener 111 is a groove wall of a groove arranged on the surface of the frame body 110.

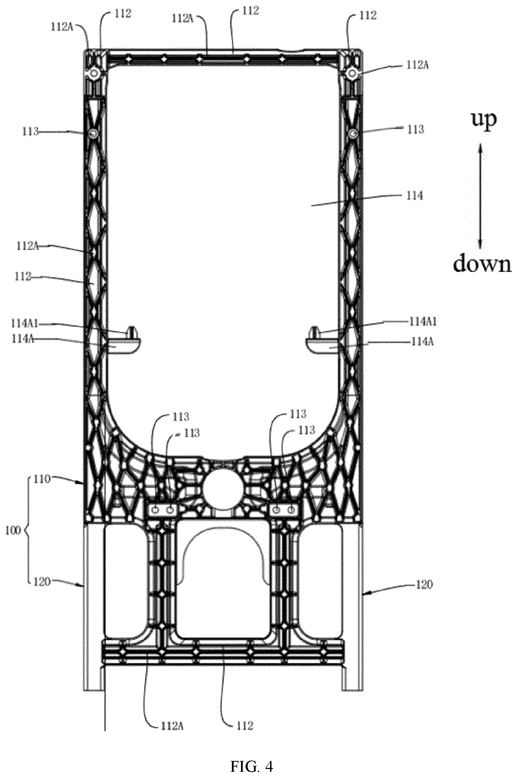

Referring to FIG. 4, the back of the frame body 110 has a recessed portion 112 filled with grid stiffeners 112A.

Through the above structure, on the one hand, the grid stiffener 112A located in the recessed portion 112 is reasonably arranged according to the difference of stress characteristics, so that the frame body 110 has both light weight and strength meeting the installation requirements; on the other hand, the main grid point of the grid stiffeners 112 A can be used as the force point of the thimble when the die is out.

It can be understood that the frame body 110, the accommodation cylinder 120, the recessed stiffener 111 and the grid stiffener 112A are an integrated structure, that is, the bracket body 100 is an integrated casting structure.

In this embodiment, referring to FIG. 1 and FIG. 4, the frame body 110 is provided with a mounting hole 113 for connecting with the mounting part on the corresponding component a. Wherein, the corresponding component a is water tank assembly, toilet parts, drainage pipe fittings, etc.

In this embodiment, referring to FIGS. 1 to 2, the frame body 110 is provided with an avoidance hole 114, the hole wall of the avoidance hole 114 is provided with an extension arm 114A, and the extension arm 114A is used to support the corresponding component a. Wherein, the corresponding component a is the water tank assembly.

Through the above structure, the setting of the extension arm 114 A can improve the connection stability between the corresponding component a and the frame body 110.

In the present embodiment, referring to FIGS. 1 to 2, the extension arm 114A is provided with a positioning insert 114a1, which is used for positioning connection with the corresponding component A. The corresponding part a is the water tank assembly.

Through the above structure, the corresponding component a can be conveniently positioned and installed on the frame body1 10.

Of course, the present invention is not limited to the above embodiments.

The scope of protection is limited by the appended claims.

## Claims

1. A mounting bracket for a bathroom installation, wherein the mounting bracket comprises
a bracket body (100) configured for an installation of a water tank assembly (a);
a locking assembly (200) arranged on the bracket body (100);
a support foot (300) arranged on the bracket body (100), wherein the support foot (300) is able to slide along an up-down direction of the bracket body (100), and the locking assembly (200) is configured to lock the support foot (300) at a preset position; the support foot (300) is provided with a sliding chute (310) arranged in the up-down direction and a guide hole (320) communicated with the sliding chute (310); the locking assembly (200) comprises
a slider (210) slidably arranged in the sliding chute (310);
a fastener, (220) wherein the fastener passes through the bracket body (100) and the guide hole (320) in sequence, and the fastener (220) is threaded with the slider (210), wherein,
the fastener (220) and the slider (210) cooperate to lock the support foot (300) at the preset position of the bracket body (100) wherein
the bracket body (100) is provided with an accommodation cavity, and the support foot (300) is slidably arranged in the accommodation cavity;
the bracket body (100) comprises a frame body (110) and an accommodation cylinder (120), the frame body and the accommodation cylinder are integrally formed, the accommodation cavity is arranged in the accommodation cylinder (120), and the frame body (110) is configured for the installation of the water tank assembly (a);
**characterised in that**
the frame body (110) is a plate-shaped structure, and a surface of the frame body (110) is provided with a recessed stiffener (111);
and a back of the frame body (110) is provided with a recessed portion (112), and the recessed portion (112) is filled with grid stiffeners (112A).

2. The mounting bracket according to claim 1, wherein
the frame body (110) is provided with a mounting hole (113) for connecting with a mounting part of the water tank assembly (a) corresponding to the mounting hole.

3. The mounting bracket according to claim 1, wherein
the frame body (110) is provided with an avoidance hole (114), a hole wall of the avoidance hole (114) is provided with an extension arm (114A), and the extension arm (114A) is configured to support the water tank assembly (a) corresponding to the extension arm.

4. The mounting bracket according to claim 3, wherein
the extension arm (114A) is provided with a positioning insert column (114A1), and the positioning insert column (114A1) is configured for positioning connection with the water tank assembly (a) corresponding to the positioning insert column.

5. The mounting bracket according to claim 1, wherein
the frame body (110), the accommodation cylinder (120) and the support foot (300) are made of aluminum.

## Patentansprüche

1. Eine Montagehalterung für eine Badezimmerinstallation, wobei die Montagehalterung die folgenden Teile umfasst:
einen Halterungskörper (100), der für die Installation einer Wassertankvorrichtung (a);
eine Verschlussvorrichtung (200), die am Halterungskörper (100) angebracht ist;
einen Stützfuß (300), der am Halterungskörper (100) angebracht ist, wobei der Stützfuß (300) entlang einer Auf-Ab-Richtung des Halterungskörpers (100) gleiten kann und die Verschlussvorrichtung (200) konfiguriert ist, den Stützfuß an seinen voreingestellten Position zu sperren; wobei der Stützfuß (300) mit einer Schieberutsche (310) in der Auf-Ab-Richtung und mit einem Führungsloch (320), das mit der Schieberutsche (310) in Verbindung steht versehen ist, und wobei die Verschlussvorrichtung (200) einen Schieberegler (210) enthält, der verschiebbar an der Schieberutsche (310) angebracht ist;
einen Verschluss (220), wobei der Verschluss der Reihe nach durch den Halterungskörper (100) und das Führungsloch (320) führt und der Verschluss (220) mit einem Schieber (210) versehen ist, wobei
der Verschluss (220) und der Schieber (210) zusammenarbeiten, um den Stützfuß (300) an seiner voreingestellten Position am Halterungskörper (100) zu sperren; wobei
der Halterungskörper (100) mit einem Aufnahmehohlraum versehen ist und der Stützfuß (300) verschiebbar im Aufnahmehohlraum angeordnet ist;
der Halterungskörper (100) einen Rahmenkörper (110) und einen Aufnahmezylinder (120) umfasst, der Rahmenkörper und der Aufnahmezylinder einstückig ausgebildet sind, der Aufnahmehohlraum sich im Aufnahmezylinder (120) befindet und der Rahmenkörper (110) für die Installation der Wassertankvorrichtung konfiguriert (a) ist;
**dadurch gekennzeichnet, dass**
der Rahmenkörper (110) eine plattenförmige Struktur aufweist und eine Oberfläche des Rahmenkörpers (110) mit einer vertieften Versteifung (111) versehen ist;
und eine Rückseite des Rahmenkörpers (110) mit einem vertieften Abschnitt (112) versehen ist, wobei der vertiefte Abschnitt (112) mit Gitterversteifungen (112A) versehen ist.

2. Die Montagehalterung nach Anspruch 1, wobei
der Rahmenkörper (110) mit einem Montageloch (113) versehen ist, das für die Verbindung mit einem dem Montageloch entsprechenden Montageteil der Wassertankvorrichtung (a) vorgesehen ist.

3. Die Montagehalterung nach Anspruch 1, wobei
der Rahmenkörper (110) mit einem Vermeidungsloch (114) versehen ist, eine Lochwand des Vormeidungslochs (114) mit einem Verlängerungsarm (114A) versehen ist und der Verlängerungsarm (114A) konfiguriert ist, die Wassertankvorrichtung (a), die dem Verlängerungsarm entspricht, zu stützen.

4. Die Montagehalterung nach Anspruch 3, wobei
der Verlängerungsarm (114A) mit einer Positioniereinsatzstütze (114A1) versehen ist und die Positioniereinsatzstütze (114A1) für die Positionierverbindung mit der Wassertankvorrichtung (a), die der Positioniereinsatzstütze entspricht, konfiguriert ist.

5. Die Montagehalterung nach Anspruch 1, wobei
der Rahmenkörper (110), der Aufnahmezylinder (120) und der Stützfuß (300) aus Aluminium gefertigt sind.

## Revendications

1. Un support de montage pour installation de baignoire, dans lequel le support de montage comprend
un corps de support (100) configuré pour l'installation d'un ensemble de réservoir d'eau (a) ;
un ensemble de verrouillage (200) agencé sur le corps de support (100) ;
un pied de support (300) agencé sur le corps de support (100), dans lequel le pied de support (300) est capable de glisser vers le haut et le bas du corps de support (100), et l'ensemble de verrouillage (200) est configuré pour verrouiller le pied de support (300) sur une position prédéfinie ; le pied de support (300) est muni d'une glissière coulissante (310) agencée dans le sens haut-bas et d'un trou de guidage (320) communiquant avec la glissière coulissante (310); l'ensemble de verrouillage (200) comprend un coulisseau (210) agencé de façon coulissante dans la glissière coulissante (310) ;
un élément de serrage, (220) dans lequel l'élément de serrage passe à travers le corps de support (100) et le trou de guidage (320) en séquence, et l'élément de serrage (220) est vissé avec le coulisseau (210), dans lequel,
l'élément de serrage (220) et le coulisseau (210) coopèrent pour verrouiller le pied de support (300) sur la position prédéfinie du corps de support (100) dans lequel
le corps de support (100) est muni d'une cavité de logement, et le pied de support (300) est agencé de façon coulissante dans la cavité de logement ;
le corps de support (100) comprend un corps de cadre (110) et un cylindre de logement (120), le corps de cadre et le cylindre de logement sont formés d'une seule pièce, la cavité de logement est agencée dans le cylindre de logement (120), et le corps de cadre (110) est configuré pour l'installation de l'ensemble de réservoir d'eau (a) ;
**caractérisé en ce que**
le corps de cadre (110) est une structure de forme plate, et une surface du corps de cadre (110) est munie d'un raidisseur enfoncé (111) ;
et le dos du corps de cadre (110) est muni d'une partie enfoncée (112), et la partie enfoncée (112) est remplie de raidisseurs à grille (112A).

2. Un support de montage selon la revendication 1, dans lequel
le corps de cadre (110) est muni d'un trou de montage (113) pour raccorder la partie de montage de l'ensemble de réservoir d'eau (a) correspondant au trou de montage.

3. Un support de montage selon la revendication 1, dans lequel
le corps de cadre (110) est muni d'un trou d'évitement (114), une paroi trouée du trou d'évitement (114) est munie d'un bras d'extension (114A), et le bras d'extension (114A) est configuré pour soutenir l'ensemble de réservoir d'eau (a) correspondant au bras d'extension.

4. Un support de montage selon la revendication 3, dans lequel
le bras d'extension (114A) est muni d'une colonne d'insert de positionnement (114A1), et la colonne d'insert de positionnement (114A1) est configurée pour positionner le raccordement avec l'ensemble de réservoir d'eau (a) correspondant à la colonne d'insert de positionnement.

5. Un support de montage selon la revendication 1, dans lequel
le corps de cadre (110), le cylindre de logement (120) et le pied de support (300) sont en aluminium.
